# EUROPEAN PATENT APPLICATION

(11) **EP 4 751 793 A1**
(43) Date of publication of application: **03.06.2026**
(21) Application number: 24215958.0
(22) Date of filing: 28.11.2024
(51) Int. Cl.: B01D 46/10, B01D 46/42

(54) **ADSORBER ELEMENT AND ADSORBER DEVICE HAVING ADSORBER ELEMENT**

(71) Applicant: MANN+HUMMEL GmbH, 71636 Ludwigsburg (DE)
(72) Inventor: WELLER, Benedikt, 71636 Ludwigsburg (DE); GEHWOLF, Klaus, 71636 Ludwigsburg (DE); HAYNL, Christian, 71636 Ludwigsburg (DE); KREINER, Anton, 71636 Ludwigsburg (DE); JESSBERGER, Thomas, 71636 Ludwigsburg (DE); WAGNER, Udo, 71636 Ludwigsburg (DE)
(74) Representative: Mann + Hummel Intellectual Property

(57) **Abstract**

An adsorber element (10) comprises a multilayered adsorber material (12) through which fluid can flow, the adsorber material (12) comprising a sorbent layer (16) configured to be regenerated using heat. The adsorber element (10) further comprises a heating device (14) positioned adjacent to the adsorber material (12) and configured to generate the heat.

## Description

### Technical Field

Embodiments refer to an adsorber element and an adsorber device having such an adsorber element.

### Background Art

Devices of this type are generally known. EP 2 403 626 B1 for example discloses an adsorber element in form of a filter element that has a pleated and multilayered filter medium. The filter medium comprises an adsorbent layer that is arranged between two nonwoven layers. In one embodiment, at the outer side of one of the nonwoven layers a support grid is arranged. The support grid is made of aluminum, steel or plastic material. The filter element is regenerated by a heated air flow of 100 - 190 °C through the filter media. The support grid serves for preventing deformation of the pleated filter medium when regenerated by the heated air flow.

A disadvantage of EP 2 403 626 B1 is that when the filter element is regenerated in an installed condition in a device, for obtaining the required air flow temperatures at the filter element, the start temperature of the heated air flow fed into the device has to be adjusted regarding its value to the device. This is due to the fact that the heated air flow will lose some energy while flowing through the device until it reaches the adsorber material. Thus, the start temperature of the heated air flow has to be much higher than the required temperature at the filter element. This drives the energy costs for the heating of the air flow. Furthermore, said value of the start temperature of the heated air flow is different for different devices. This is because this start temperature depends on the material and the temperature of the components of the respective device conducting the heated air flow and the distance the heated air flow takes through the respective device until it reaches the adsorber material. Thus, one has to determine for every device the fitting start temperature of the heated air flow. This makes the regeneration of the filter element in an installed condition of the filter element impracticable. Moreover, said components of the device have to be heat resistant to melting and burning for at least said start temperatures. This also increases the costs of the device. When the filter element is removed from the device and brought into an external heated air flow for regeneration, this is associated with effort and expense.

It is an object of the embodiments to allow for easy and cost-effective regeneration of an adsorber element.

This is achieved by an adsorber element according to claim 1 and by an adsorber device according to claim 17. Advantageous embodiments are given in the subclaims and the description.

### Summary

In accordance with the embodiments, an adsorber element is provided. Adsorption refers in particular to the accumulation of gases or dissolved substances (adsorbate) on the surface of solid substances (adsorbent), due to intermolecular forces. In present case, the adsorber element serves for the adsorption of molecules out of a gas. In particular, the adsorber element serves for adsorption of gas molecules of one gas out of another gas. For instance, the adsorber element may be used for adsorption of water molecules and/or volatile organic compounds out of air and/or for adsorption of carbon dioxide molecules out of a post combustion gas or out of environmental air.

Adsorption can be divided into a physical adsorption (physisorption) and a chemical adsorption (chemisorption).

In physisorption, the chemical bonding structure of the adsorption molecules typically changes only slightly or does not change. Between adsorbate and adsorbent there are longer ranging, weaker binding forces such as dipole-dipole interactions, van der Waals forces or hydrogen bonds. Due to the long ranging binding forces, several adsorption layers can form on top of each other. In addition, physisorption does require a low activation energy and is therefore faster than chemisorption. Furthermore, physisorption is completely reversible. This is advantageous for the adsorber element of the embodiments.

Chemisorption is based on stronger and shorter ranging chemical binding forces such as covalent bonds. Therefore, only one monomolecular layer is formed when an increased activation energy is applied. The adsorption molecules are chemically altered in their bonding structure and electron distribution when they come into contact with the adsorbent. This process can therefore be reversed either with high temperatures or by chemically treating the surface. Chemical adsorption is chemically selective, i.e., it only takes place with certain adsorbent-adsorbate pairs.

The adsorber element according to the embodiments comprises a multilayered adsorber material through which fluid, the adsorber material comprising a sorbent layer configured to be regenerated using heat. The adsorber element further comprises a heating device positioned adjacent to the filter material and configured to generate the heat.

The positioning of the heating device adjacent to the filter material may mean that the smallest distance between them is smaller than three centimeter, in particular smaller than one centimeter. The heating device may be in contact with the adsorber material. Furthermore, the heating device is generally stationary in relation to the adsorber material.

Due to the fact, that the adsorber element has a heating device adjacent to the adsorber material, the adsorber element has its internal heat source, in particular for regenerating the sorbent layer. Said heating device is that close to the filter element that a direct heat input into the adsorber material is possible with reduced or advantageously minimal loss of energy from the heating device to the adsorber material. This makes the heating process cost effective. Because the heating device is part of the adsorber element, the adsorber element may be regenerated in an installed condition in an adsorber device. Advantageously, other components of the adsorber device such as housing parts are exposed to reduced temperatures as compared to the adsorber element and thus need not be adapted to high temperatures. This makes the adsorber element easy to use and does not increase the costs of the device. Regeneration of the adsorber element in a state removed from the housing is also conceivable, in principle. Furthermore, if the heating device is stationary in relation to the adsorber material, the heat input into the adsorber material, in particular the sorbent layer, is pre-determinable and easy to adjust by adjusting the value of the heat emitted by the heating device. This benefits the easy handling of the adsorber element. In summery an adsorber element is provided that is easy and cost effective to regenerate.

In a particular embodiment, it is provided that the adsorber element is formed as a flat adsorber element. Thus, the adsorber element is designed space-saving.

Alternatively, the adsorber element may circumferentially surround a longitudinal axis. This may yield a compact design.

In a further particular embodiment, it is provided that the heating device comprises a heating layer. The heating layer may extend in parallel to the sorbent layer and/or over the entire sorbent layer. Thus, due to the heating layer an essentially uniform heat input into the sorbent layer can be achieved.

In a further particular embodiment, it is provided that the heating layer comprises a perforated film. The perforated film may be a PTC - Positive Temperature Coefficient - film. In other words, PTC-elements are embedded in the perforated film. The perforated film may be designed with holes or slots. Thus, the fluid flowing through the adsorber material can pass through the heating layer.

In a further particular embodiment, it is provided that the layers of the adsorber material are pleated. Thus, the filtering surface of the adsorber material is increased while keeping overall dimensions low.

In a further particular embodiment, it is provided that the heating layer is pleated together with the sorbent layer and layers of the adsorber material. This further supports the essentially uniform heat input of the heating layer into the sorbent layer. Furthermore, the pleated heating layer makes it possible to input heat into the depth of a fold even when the adsorber material is pleated with narrow pleat spacing.

In a further particular embodiment, it is provided that the heating device comprises a meandering heating wire. The heating wire may be arranged at a distance from or in contact with the adsorber material, in particular a thermally conductive layer of the adsorber material. Due to the meandering heating wire a good heat emission of the heating device is achievable.

In a further particular embodiment, it is provided that the adsorber element comprises an adsorber cover holding the heating wire, and a frame to which the adsorber material and the adsorber cover are attached. The adsorber material may be connected by gluing or welding to the frame. The frame may seal pleats of the adsorber material and/or may facilitate handling and installation of the adsorber element. Furthermore, due to the frame of the adsorber material, heat emission out of the adsorber element in radial direction to the fluid flow direction may be reduced. The frame may be rigid, semi-rigid or flexible. A rigid frame may be made from plastics. A semi-rigid or flexible frame may be made from nonwoven.

In a further particular embodiment, it is provided that the adsorber material is pleated with folds, and a portion of the heating wire is positioned in each of the folds. This further supports the essentially uniform heat input from the heating layer into the sorbent layer.

In a further particular embodiment, in particular with reference to physisorption, it is provided that the sorbent layer is configured for adsorption at temperatures of at most 50 °C and for desorption (i.e., regeneration) at temperatures of at least 80 °C, in particular at least to 100 °C or in particular at least to 150 °C.

In a further particular embodiment, it is provided that the heating device comprises a positive temperature coefficient (PTC) heating element. PTC heating elements have a high process safety. Furthermore, PTC-heating elements close to or in contact with the adsorber material allow for energy efficient regeneration.

In a further particular embodiment, it is provided that the adsorber material further comprises a thermally conductive layer positioned between the heating device and the sorbent layer, the thermally conductive layer being configured to conduct the heat generated by the heating device to the sorbent layer and to distribute the generated heat over the sorbent layer. Thus, uniform distribution of heat over the extension of the adsorber material is enhanced. The thermally conductive layer and the heating layer (if provided) may be connected to each other. The thermally conductive layer as part of the adsorber material may be connected to the frame by gluing or welding.

In a further particular embodiment, it is provided that the thermally conductive layer comprises a grid and/or a nonwoven and comprises any one or any combination of metal, carbon fibers, synthetic material comprising a thermally conductive additive, and polyaniline. Such a thermally conductive layer may cover essentially the whole surface of the adsorber material while being permeable for gas flow. In particular, a grid as the thermally conductive layer may be made from any of these materials; plastic having a thermally conductive additive or polyaniline are particularly suitable for a nonwoven thermally conductive layer. The thermally conductive additive may be at least one of the following: Carbon fibers, soot, metal particles.

In a further particular embodiment, it is provided that the grid is at least partially coated with adhesive. The grid may in particular be made from wires, which are embedded in the adhesive. This allows for attaching the grid to the adsorber material. Furthermore, heat transfer from the grid into the adsorber material is enhanced.

A nonwoven thermally conductive layer may be glued or welded to the adsorber material.

In a further particular embodiment, it is provided that the thermally conductive layer comprises thermally conductive adhesive beads on a surface of the adsorber material. Particularly, the adhesive of the beads contains a thermally conductive additive. Application of adhesive beads is convenient in filter or adsorber element manufacturing. Thus, manufacturing costs may be kept low.

In a further particular embodiment, it is provided that the adsorber material further comprises a covering layer positioned at least on one side of the sorbent layer, the covering layer comprising any one or any combination of polyester, polypropylene, and polyamide. The respective covering layer may have filtering properties, for example for filtering particles. The covering layer may be a nonwoven. The thermally conductive layer may be connected to the adjacent covering layer.

In a further particular embodiment, it is provided that the sorbent layer comprises adsorbent particles. In other words, a granular material or powder is used as adsorbent material. In particular, the adsorbent particles are contained between two covering layers. A particle size of the adsorber particles may be 0.1 to 2 Millimeters.

The sorbent layer may comprise adsorbents polymers, silicates, activated carbon, and/or molecular sieves. The weight per area of adsorber material (in the unpleated state, if applicable) of adsorbent polymers, especially when provided as particles, may be between 150 and 600 grams per square meter. The weight per area of adsorber material (in the unpleated state, if applicable) of silicates may be between 150 and 900 grams per square meter.

The embodiments also refer to an adsorber device comprising the adsorber element as described above. The adsorber device further comprises a housing for the adsorber element. For use, the adsorber element is installed inside the housing.

### Brief Description of Drawings

Other advantages and features of the embodiments will be appreciated from the following description of the embodiments with reference to the figures of the drawing, which show significant details, and from the claims. The individual features, as described above or explained below, may each be implemented individually or implemented together in any useful combination in variants of the embodiments.
Fig. 1 shows, schematic and not to scale, a perspective view of a first embodiment of the adsorber element according to the embodiments.
Fig. 2 shows, schematic, not to scale and cut off, a longitudinal section through the adsorber element according to Fig. 1.
Fig. 3 shows, schematic and not to scale, an enlarged detail of Fig. 2 in the area designated with X.
Fig. 4 shows, schematic and not to scale, a perspective sectional view of a second embodiment of the adsorber element according to the embodiments.
Fig. 5 shows, schematic and not to scale, an exploded view of the second embodiment of the adsorber element.
Fig. 6 shows, schematic, not to scale and cut off, a longitudinal section of the second embodiment of the adsorber element.
Fig. 7 shows, schematic and not to scale, an enlarged detail of Fig. 6 in the area designated with Y.
Fig. 8 shows, schematic and not to scale, an adsorber material with adhesive beads on its surface as a thermally conductive layer, in a plan view.
Fig. 9 shows, schematic and not to scale, an adsorber device according to the embodiments, in a sectional view.

### Detailed Description

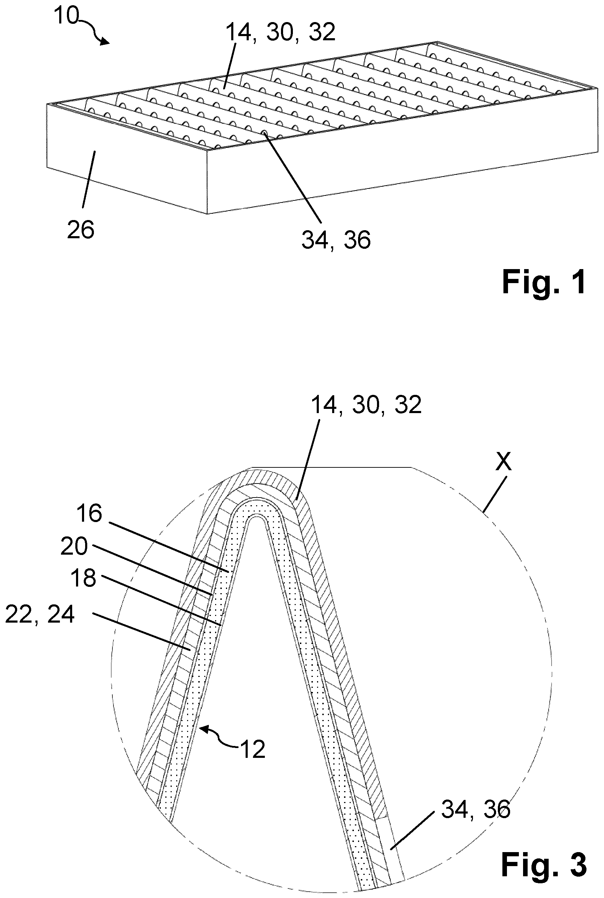

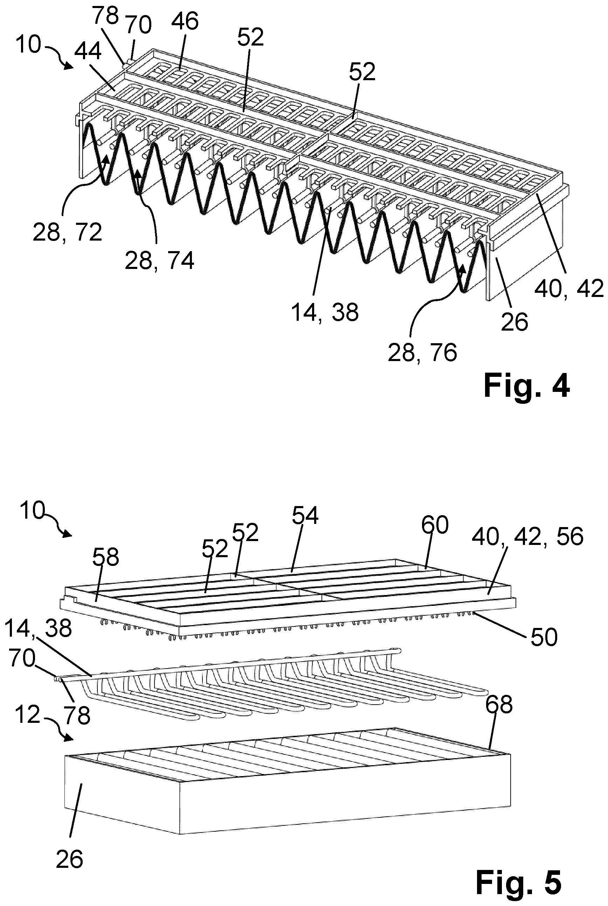

Figs. 1 to 3 show a first embodiment of the adsorber element 10 according to the embodiments. Figs. 4 to 7 show a second embodiment of the adsorber element 10 according to the embodiments. In each of the embodiments, the adsorber element 10 is formed as described in the following.

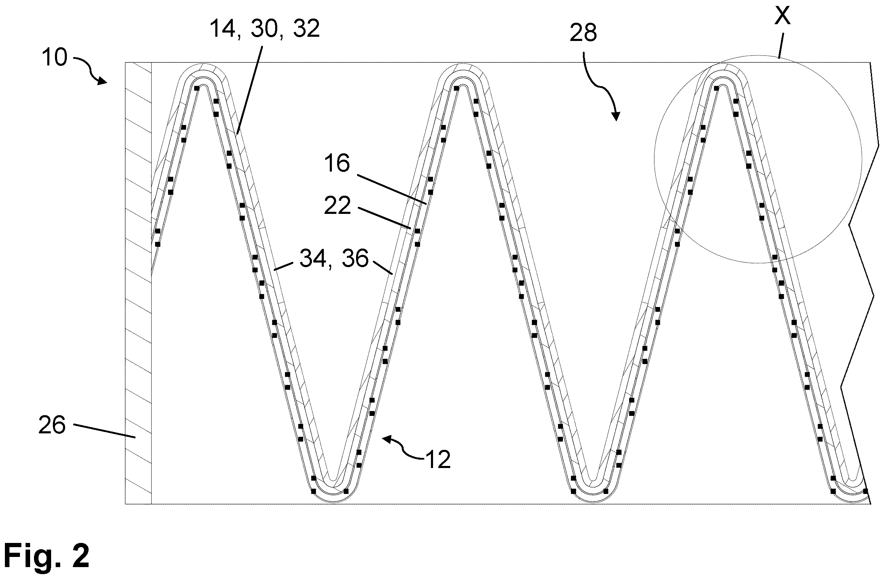

The adsorber element 10 comprises a multilayered adsorber material 12 (Figs. 2, 3, 6, 7) through which fluid can flow, and a heating device 14. The heating device 14 is arranged adjacent to the adsorber material 12 and is stationary in relation to the adsorber material 12. The adsorber material 12 has at least a sorbent layer 16 that can be regenerated by heat input. The heating device 14 serves for generating the heat input. Gas flow may support the regeneration of the adsorber material 12.

The sorbent layer 16 (Figs. 2, 3, 6, 7) comprises adsorbent particles (not shown in detail). In other words, a granular material or powder is used as adsorbent material. The adsorbent particles are contained between two covering layers 18, 20. A particle size of the adsorber particles may be 0.1 to 2 Millimeters. The sorbent layer 16 may comprise adsorbent polymers, silicates, activated carbon, and/or molecular sieves. The weight per area of the adsorber material (in the unpleated state, if applicable) of adsorbent polymers, especially when provided as particles, may be between 150 and 600 grams per square meter. The weight per area of adsorber material (in the unpleated state, if applicable) of silicates may be between 150 and 900 grams per square meter. The sorbent layer 16 is designed for adsorption at temperatures of at most 50 °C and for desorption at temperatures of at least 80 °C, in particular at least to 100 °C or in particular at least to 150 °C.

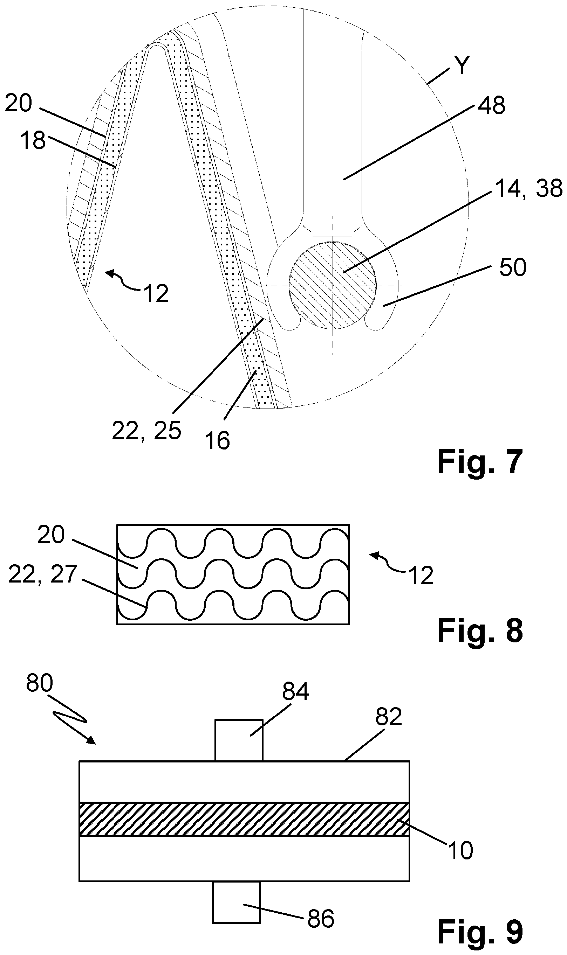

On each side of the sorbent layer 16 a covering layer 18, 20 (Figs. 3, 7) is adjoined to the sorbent layer 16. The covering layers 18, 20 are part of the adsorber material 12. At least one of the respective covering layers 18, 20 may have filtering properties, for example for filtering particles, and may be formed as a nonwoven. Further, the respective covering layer 18, 20 may be made of polyester, polypropylene or polyamide.

On its side facing the heating device 14, the covering layer 20 closest to the heating device 14 is adjoined by a thermally conductive layer 22 (Figs. 2, 3, 6, 7, 8). The thermally conductive layer 22 is part of the adsorber material 12. The thermally conductive layer 22 serves for conducting the heat emitted by the heating device 14 via the covering layer 20 to the sorbent layer 16 and for distributing the heat over the sorbent layer 16.

In one embodiment, as shown in Fig. 3, the thermally conductive layer 22 is formed as a nonwoven 24. The nonwoven 24 may be made of plastic having a thermally conductive additive.

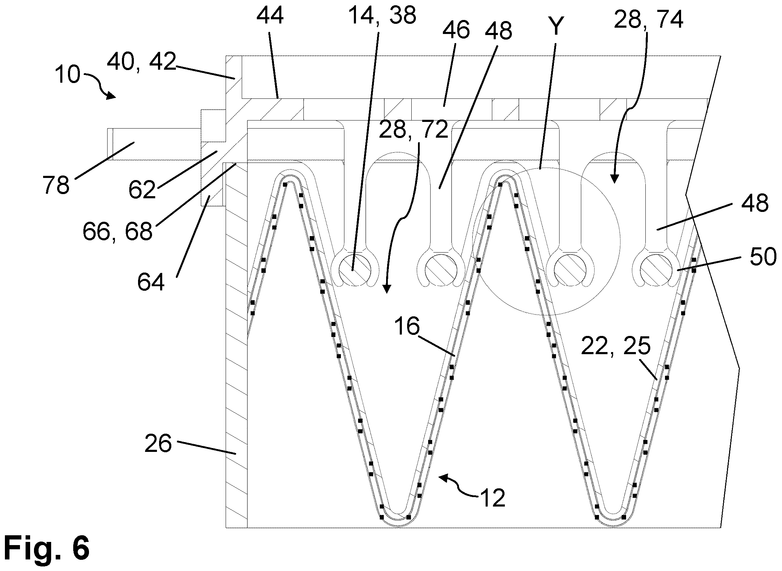

In another embodiment, as shown in Figs. 6 and 7, the thermally conductive layer 22 is formed as a grid 25. For better visualization, the grid is not shown in detail, but only in principle by a hatched area. The grid 25 is coated with adhesive. The grid 25 may be made of metal, carbon fibers, polyaniline and/or plastic material having a thermally conductive additive. The thermally conductive additive may be carbon fibers, soot and/or metal particles.

It is also conceivable to form the thermally conductive layer 22 as thermally conductive adhesive beads 27, which are applied to the surface of the covering layer 20 facing the heating device 14, see Fig. 9, where the adsorber material 12 is shown prior to pleating. The adhesive of the beads 27 may contain a thermally conductive additive.

The layers 16, 18, 20, 22 (Figs. 2, 3, 6, 7) of the adsorber material 12 are pleated having folds 28. Every layer 16, 18, 20, 22 of the adsorber material 12 may be connected to its adjacent layer 16, 18, 20, 22 of the adsorber material 12. The adsorber material 12 is connected by gluing or welding to a frame 26 of the adsorber material 12. The frame 26 circumferentially encompasses the adsorber material 12 in order to seal its side faces perpendicular to the main flow direction. The adsorber element 10 is designed as a flat adsorber element 10.

The embodiments of the adsorber element 10 differ from each other with regard to the design of the heating device 14 as described in the following.

In the first embodiment the heating device 14 is formed as a heating layer 30 (Figs. 1 to 3). The heating layer 30 is designed as a perforated film 32 and is pleated together with the layers 16, 18, 20, 22 of the adsorber material 12. The perforated film 32 may be a PTC - Positive Temperature Coefficient - film. Perforations 34 of the film 32 are present as circular holes 36. It is also conceivable that the perforations 34 are formed as elongate slots (not shown). The heating layer 30 extends in parallel to the sorbent layer 16 (with respect to the local orientation of the layers 16, 30) and over the entire sorbent layer 16. The heating layer 30 may be connected to its adjacent covering layer 18, 20.

In the second embodiment the heating device 14 is formed as a meandering heating wire 38 (Figs. 4 to 7). The heating wire 38 is held by a cover 40 of the adsorber element 10. The adsorber cover 40 is connected, e.g., glued, to the frame 26 of the adsorber material 12.

In the depicted embodiment, the cover 40 (Figs. 4 to 6) has an essentially hollow cuboid first frame part 42 and a ceiling part 44 being in one piece with the first frame part 42 and extending perpendicular thereto. The ceiling part 44 has several, in particular essentially rectangular, cut-outs 46 (Fig. 4) for fluid flow through the adsorber element 10. On the inside (i.e., facing the adsorber material 12) of the ceiling part 44 and perpendicular thereto bars 48 (Fig. 6) extend away from the ceiling part 44. The bars 48 have on their free ends two snaping noses 50 for gripping the heating wire 38.

On the outside of the ceiling part 44 reinforcement struts 52 (Figs. 4, 5) extend away from the ceiling part 44 (and the adsorber material 12). Several reinforcement struts 52 at the same time extend from one transvers side 58 of the first frame part 42 to the other transvers side 60 of the first frame part 42 at distance from each other, whereas in particular one reinforcement strut 52 extends from one longitudinal side 54 of the first frame part to the other longitudinal side 56 of the first frame part 42.

At its end area facing the frame 26 of the adsorber material 12, the first frame part 42 of the adsorber cover 40 has a projection 62 extending in perpendicular direction to the outer face of the ceiling part 44. From the outer end of the projection 62, a second frame part 64 of the adsorber cover 40 extends in parallel to the first frame part 42, wherein the second frame part 64 is offset towards the outside with respect to the first frame part 42. Thereby the cover 40 forms a step 66 which forms a contact surface for the one end face 68 of the frame 26 of the adsorber material 12. The frame 26 may be glued to the cover 40 at the shoulder or step 66 formed by projection 62 and second frame part 64.

In every fold 28 two rows (Figs. 5, 6) of bars 48 are arranged at distance from each other for holding the heating wire 38 at different locations.

Starting from one port 70 (Figs. 4, 5) of the heating wire 38, the heating wire 38 enters a first fold 72 (Fig. 6) at one end of the first fold 72 and extends along the first fold 72 held by one row of the bars 48. On the other end of the fold 72 the heating wire 38 turns about 180 degrees and extends back to the one end of the first fold 72 along said first fold 72 held by the other row of the bars 48. Subsequently the heating wire 38 exits the first fold 72 and enters a second fold 74 adjacent to the first fold 72. In the second fold 74 and the remaining folds 28, the course of the heating wire 38 repeats itself like in the first fold 72 until the heating wire 38 exits the last fold 76. Thereafter the heating wire 38 extends over the folds 28 and perpendicular thereto back to the area of its one port 70, where the heating wire 38 ends with another port 78. The ports 70, 78 may be aligned in parallel to one another. The ports 70, 78 serve for supplying electricity to the heating wire 38.

The adsorber element 10 may be part of an adsorber device 80 as shown in Fig. 9. The adsorber device 80 comprises a housing 82, in which the adsorber element 10 is installed. The housing 82 has an inlet 84 and an outlet 86 for a gas flow passing through the adsorber element 10.

In summary, the embodiments refer to an adsorber element. A heating device is arranged adjacent to an adsorber medium. A thermally conductive layer may be arranged between the heating device and the adsorber material. The adsorber medium and the thermally conductive layer may be pleated. The thermally conductive layer supports distribution of heat for regenerating the adsorber medium by desorption. The thermally conductive layer may contribute to evenly heating the adsorber medium, in particular from its upstream fold edges to its downstream fold edges.

### Reference Signs List

- 10: adsorber element
- 12: adsorber material
- 14: heating device
- 16: sorbent layer
- 18: covering layer
- 20: covering layer closest to the heating device
- 22: thermally conductive layer
- 24: nonwoven
- 25: grid
- 26: frame of the adsorber material
- 27: thermally conductive adhesive beads
- 28: folds
- 30: heating layer
- 32: film
- 34: perforation
- 36: holes
- 38: heating wire
- 40: adsorber cover
- 42: first frame part of the cover
- 44: ceiling part of the cover
- 46: cut-outs of the cover
- 48: bar
- 50: snapping nose
- 52: reinforcement strut
- 54: one longitudinal side of the cover
- 56: other longitudinal side of the cover
- 58: one transvers side of the cover
- 60: other transverse side of the cover
- 62: projection of the first frame part of the cover
- 64: second frame part of the cover
- 66: step of the cover
- 68: end face of the frame of the adsorber material
- 70: one port of the heating wire
- 72: first fold
- 74: second fold
- 76: last fold
- 78: other port of the heating wire
- 80: adsorber device
- 82: housing
- 84: inlet
- 86: outlet

## Claims

1. An adsorber element (10) comprising:
a multilayered adsorber material (12) through which fluid can flow, the adsorber material (12) comprising a sorbent layer (16) configured to be regenerated using heat; and
a heating device (14) positioned adjacent to the adsorber material (12) and configured to generate the heat.

2. The adsorber element (10) according to claim 1, wherein the heating device (14) comprises a heating layer (30).

3. The adsorber element (10) according to claim 2, wherein the heating layer (30) comprises a perforated film (32).

4. The adsorber element (10) according to claims 2 or 3, wherein the heating layer (30) is pleated together with the sorbent layer (16) and layers (18, 20, 22) of the adsorber material (12).

5. The adsorber element (10) according to any one of claims 1 to 4, wherein the heating device (14) comprises a meandering heating wire (38).

6. The adsorber element (10) according to claim 5, further comprising:
an adsorber cover (40) holding the heating wire (38); and
a frame (26) to which the adsorber material (12) and the adsorber cover (40) are attached.

7. The adsorber element (10) according to claim 5 or 6, wherein the adsorber material (12) is pleated with folds (28), and
wherein a portion of the heating wire (38) is positioned in each of the folds (28).

8. The adsorber element (10) according to any one of claims 1 to 7, wherein the sorbent layer (16) is configured for adsorption at temperatures of at most 50 °C and for desorption at temperatures of at least 80 °C, in particular at least to 100 °C or in particular at least to 150 °C.

9. The adsorber element (10) according to any one of claims 1 to 8, wherein the heating device (14) comprises a positive temperature coefficient (PTC) heating element.

10. The adsorber element (10) according to any one of claims 1 to 9, wherein the adsorber material (12) further comprises a thermally conductive layer (22) positioned between the heating device (14) and the sorbent layer (16), the thermally conductive layer (22) being configured to conduct the heat generated by the heating device (14) to the sorbent layer (16) and to distribute the generated heat over the sorbent layer (16).

11. The adsorber element (10) according to claim 10, wherein the thermally conductive layer (22) comprises a grid (25) and/or a nonwoven (24), and comprises any one or any combination of metal, carbon fibers, synthetic material comprising a thermally conductive additive, and polyaniline.

12. The adsorber element (10) according to claim 11, wherein the grid (25) is at least partially coated with adhesive.

13. The adsorber element (10) according to any one of claims 10 to 12, wherein the thermally conductive layer (22) comprises thermally conductive adhesive beads on a surface of the adsorber material (12).

14. The adsorber element (10) according to any one of claim 1 to 13, wherein the adsorber material (12) further comprises a covering layer (18, 20) positioned at least on one side of the sorbent layer (16), the covering layer (18, 20) comprising any one or any combination of polyester, polypropylene, and polyamide.

15. An adsorber device (80) comprising:
the adsorber element (10) according to any one of preceding claims; and
a housing (82) for the adsorber element (10).
